# EUROPEAN PATENT APPLICATION

(11) **EP 1 413 559 A1**
(43) Date of publication of application: **28.04.2004**
(21) Application number: 02741357.4
(22) Date of filing: 27.06.2002
(51) Int. Cl.: C03C 3/06, C03B 20/00

(54) **HIGH PURITY SYNTHETIC VITREOUS SILICA PARTICLES**

(30) Priority: 27.06.2001 JP 2001195407
(71) Applicant: M. Watanabe & Co., Ltd., Tokyo 103-0022 (JP); ASAHI DENKA KOGYO KABUSHIKI KAISHA, Tokyo 116-0012 (JP)
(72) Inventor: KUSUHARA, Masakio M. WATANABE & CO., LTD., Chuo-ku, Tokyo 103-0022 (JP); WATANABE, Hiroyuki M. WATANABE & CO., LTD., Chuo-ku, Tokyo 103-0022 (JP); UEHARA, Hirofumi M. WATANABE & CO., LTD., Chuo-ku, Tokyo 103-0022 (JP); SANPEI, Keiko M. WATANABE & CO., LTD., Chuo-ku, Tokyo 103-0022 (JP); KURITA, Naoyasu ASAHI DENKA KOGYO KABUSHIKI KAISHA, Arakawa-ku, Tokyo 116-0012 (JP); TADA, Shuichi ASAHI DENKA KOGYO KABUSHIKI KAISHA, Arakawa-ku, Tokyo 116-0012 (JP); OMI, Jinichi ASAHI DENKA KOGYO KABUSHIKI KAISHA, Arakawa-ku, Tokyo 116-0012 (JP); TAKAHASHI, Makio ASAHI DENKA KOGYO KABUSHIKI K., Arakawa-ku, Tokyo 116-0012 (JP); MORITA, Hiroshi ASAHI DENKA KOGYO KABUSHIKI KAISHA, Arakawa-ku, Tokyo 116-0012 (JP)
(74) Representative: Whalley, Kevin
(86) International application number: PCT/JP2002/006504
(87) International publication number: WO 2003/002473

(57) **Abstract**

High purity synthetic quartz glass particles are derived from alkali metal silicate and have a total amount of metal impurities content of at least 1 µg/g and, in particular, have oxygen-deficient defects. The high-purity synthetic quartz glass particles having high viscosity similar to natural quartz and high-purity similar to known synthetic quartz can be provided at a low cost.

## Description

### Technical Field

The present invention relates to high-purity synthetic quartz glass particles. More specifically, it relates to high-purity synthetic quartz glass particles having high viscosity suitable for making products such as articles for heat-treating semiconductors, crucibles for pulling a silicon single crystal, or lamp materials.

### Background Art

In general, quartz glass, which is widely used for industrial parts, can be classified into the following two types: natural quartz glass made from silica or natural quartz; and synthetic quartz glass made from silicon tetrachloride.

Natural quartz and natural silica, which are the raw material for natural quartz glass, are mined in countries such as India, the United States (South Carolina), Brazil, and Madagascar. After being collected, the silica is pulverized, and then flotation or hydrofluoric acid treatment is performed. For example, when quartz glass for semiconductors is purified from a pegmatitic raw material, the feldspar and mica content of the raw material is more than 80%. Consequently, the effective quartz content is less than 20% in the pegmatitic raw material. In actuality, only about 10% of the raw material can be used for producing commercial silica products, and, thus, a considerable amount of the raw material for quartz glass is discarded. As a result, this leads to problems such as depletion of raw materials and destruction of the environment caused by development.

There are known technologies for highly purifying the raw materials for natural quartz glass such as high-temperature chlorine gas treatment. It is, however, extremely difficult to remove the impurities contained inside the quartz particles.

For these reasons, although natural quartz has high viscosity that is suitable for making products such as articles for heat-treating semiconductors, it is difficult to use natural quartz for products that require high purity, as described above.

On the other hand, generally, synthetic quartz glass can be purified to a higher level compared to natural quartz. The production cost for synthetic quartz glass, however, is expensive because silicon tetrachloride, which is a raw material for synthetic quartz, is produced by reducing silica into silicon metal and then chlorinating the silicon metal. A certain amount of silicon tetrachloride is produced as a by-product during the process of preparing polysilicon. By using this by-product, the price and production cost of silicon tetrachloride can be reduced. In the production process of synthetic quartz, however, the silicon tetrachloride must be heated and vaporized and, then, hydrolyzed in an oxyhydrogen flame to produce fine particles of silica. Then the fine particles of silica must be deposited and sintered. As a result, the total production cost of synthetic quartz is increased.

It is desirable to use synthetic quartz with high viscosity for making products such as articles for heat-treating semiconductors. However, synthetic quartz produced from silicon tetrachloride has low viscosity.

Recently, a method for forming an inner transparent layer of a crucible for pulling a silicon single crystal from silica particles prepared by a sol-gel process using methoxysilane has been employed. However, silica particles prepared from methoxysilane are costly and have low viscosity.

Thus, an object of the present invention is to solve the above-mentioned problems and to provide high-purity synthetic quartz glass particles that have high viscosity similar to natural quartz and have high-purity similar to known synthetic quartz, at a low production cost.

### Disclosure of Invention

As a result of an intensive study conducted in order to solve the above-mentioned problems, the inventors have discovered that the above-mentioned objective may be achieved by the present invention.

More specifically, the high-purity synthetic quartz glass particles according to the present invention are derived from alkali metal silicate and contain a total amount of metal impurities of 1 µg/g or less.

In particular, the high-purity synthetic quartz glass particles according to the present invention include oxygen-deficient defects and, preferably, have an OH radical content of 200 ppm or less.

The high-purity synthetic quartz glass particles according to the present invention have high viscosity suitable for making products such as articles for heat-treating semiconductors. In particular, the viscosity of the particles at 1,300°C are at least 2×10¹⁰ Pa^{·}s or, preferably, at least 3.6×10¹⁰ Pa^{·}s. This level of viscosity has never been achieved for known synthetic quartz and has been achieved for the first time in the present invention.

### Best Mode for Carrying Out the Invention

Embodiments of the present invention are described in detail in the following.

The high-purity synthetic quartz glass particles according to the present invention are derived from alkali metal silicate. Synthetic quartz glass that is not derived from alkali metal silicate does not exhibit such high viscosity levels as described above.

The synthetic quartz glass contains a total amount of metal impurities of 1 µg/g or less or, preferably, 0.5 µg/g or less. If the total amount of impurities exceeds 1 µg/g, high viscosity levels as described above cannot be achieved.

The reason for the high-purity synthetic quartz glass particles according to the present invention to have a high viscosity is explained in the following.

If a large amount of alkali metal impurities are contained in the synthetic quartz glass particles, the impurities break the silica bonds and then bond with non-bridging oxygen, causing the viscosity to be reduced significantly. Metal impurities other than the alkali metal impurities would also react in a way that reduces viscosity. Therefore, by limiting the total amount of metal impurities to 1 µg/g or less or, preferably, 0.5 µg/g or less, these reactions can be suppressed and high viscosity, as described above, can be achieved.

The synthetic quartz glass particles derived from alkali metal silicate and including a total amount of metal impurities of 1 µg/g or less or, preferably, 0.5 µg/g or less probably have a silica matrix structure as set forth by Zachariazen. The inventors have compared the percentage of 4 to 6 membered rings and more-membered rings included in the silica matrix structure and have discovered a tendency for viscosity to increase as the percentage of 4 to 6 membered rings increased, i.e. as the amount of oxygen-deficient defects increased.

Consequently, it has become apparent that the high-purity synthetic quartz glass particles according to the present invention include, in particular, oxygen-deficient defects.

The oxygen-deficient defects are formed when a gel prepared from alkali silicate including a large amount of silanol groups undergoes dehydration and polycondensation. The oxygen-deficient defects formed this way tightened the silica matrix structure and, as a result, increased the viscosity.

An example of a method for identifying or determining the oxygen-deficient defects included in the high-purity synthetic quartz glass particles is a UV spectrometric method. More specifically, the oxygen-deficient defects have a peak of UV absorption around 245 nm. If a characteristic absorption peak is found around 245 nm by UV spectrometry, oxygen-deficient defects are present. Thus, the high-purity synthetic quartz glass particles according to the present invention will, preferably, have a characteristic UV absorption peak around 245 nm.

More preferably, the high-purity synthetic quartz glass particles according to the present invention have a UV absorption peak around 245 nm, and the UV transmittance of this peak is 95% or less of the UV transmittance at 300 nm.

The high-purity synthetic quartz glass substantially does not absorb light in the wave length region beyond 300 nm. For this reason, if the result of comparing the UV transmittances at 300 nm and 245 nm is as described above, this means sufficient oxygen-deficient defects required for high viscosity are present in the high-purity synthetic quartz glass.

The method for measuring UV spectrum is not limited to a specific method. However, when the high-purity synthetic quartz glass particles are once melted to prepare a specimen, it is preferable to prepare the specimen by flame-fusing the particles at 1,830°C with an oxyhydrogen flame. This is preferable because if the high-purity synthetic quartz glass particles are melted at high temperatures such as 2,000°C or higher or are vacuum-melted in a graphite member, the structure of the particles changes and, as a result, accurate measurement of the UV spectrum becomes impossible.

Any appropriate method for accurately measuring UV spectrum may be employed.

The fewer the number of OH radicals present as silanol in the high-purity synthetic quartz glass particles the larger the viscosity of the particles. This is because it is assumed that the H⁺ ions break the silica matrix in the presence of OH radicals and cause viscosity to decrease. Therefore, the high-purity synthetic quartz glass particles according to the present invention, preferably, have an OH radical content of 200 ppm or less or, more preferably, 100 ppm or less.

Since it is most preferable to have the least amount of OH radicals, there is no lower limit for the amount of OH radicals included in the high-purity synthetic quartz glass particles, and, thus, preferable limits may be set for each condition. The amount of OH radicals included in quartz prepared by baking silica, as described above, decreases in proportion to the length of the baking time. Therefore, the baking time may be selected according to the industrial suitability and use of the synthetic quartz glass particles.

The method for preparing quartz glass particles that are derived from alkali metal silicate and that contain a small amount of total metal impurities is not limited. For example, a silica gel may be prepared from an alkali metal silicate solution using a sol-gel method, and then synthetic quartz glass particles may be obtained by baking the gel. To prepare synthetic quartz glass particles with high-purity, any process or any combination of processes of dealkalization, cation exchange, or rinsing may be employed.

In particular, it is preferable to add hydrogen peroxide during the above-mentioned processes in order to reduce the amount of polyvalent metal impurities.

In the following, the present invention is described in detail by referring to examples. The present invention, however, is not limited to the following examples.

### EXAMPLE 1

A silica solution prepared by dealkalizing a sodium silicate aqueous solution was mixed with nitric acid and hydrogen peroxide. Then metal impurities were removed by performing cation exchange treatment. After the silica solution was gelated in a neutral environment, it was frozen and melted to separate the water. In this way, a hydrated silica gel with a 2 mm particle diameter including 45 percent by weight SiO₂ was prepared. After acidification with hydrochloric acid and drying, the hydrated silica gel was rinsed with a cleaning fluid including hydrochloric acid and hydrogen peroxide. In this way, high-purity silica particles were obtained.

The silica particles were baked in a 1,250°C dry nitrogen atmosphere to prepare high-purity synthetic quartz glass particles according to the present invention.

The total amount of metal impurity content of the high-purity synthetic quartz glass particles was 0.91 µg/g and the OH radical content was 160 ppm.

The high-purity synthetic quartz glass particles were fused with an oxyhydrogen flame in a furnace at 1,830°C to form a high-purity synthetic quartz glass piece with a thickness of 4 mm. This piece was mirror finished, and then its UV absorption spectrum was measured. As a result of the measurement, a characteristic peak of 83% transmittance at 245 nm was observed. Moreover, the percentage of the UV transmittance at 245 nm of the UV absorption spectrum was 92% of the UV transmittance at 300 nm.

The viscosity of the high-purity synthetic quartz glass particles at 1,300°C was as high as 2.51×10¹⁰ Pa^{·}s.

### EXAMPLE 2

A silica solution prepared by dealkalizing a sodium silicate aqueous solution was mixed with nitric acid and hydrogen peroxide. Then metal impurities were removed by performing cation exchange treatment. After the silica solution was gelated in an acidic environment, it was frozen and melted to separate the water. In this way, a hydrated silica gel with a 3 mm particle diameter including 25 percent by weight SiO₂ was prepared. After drying, the hydrated silica gel was rinsed with a cleaning fluid including hydrochloric acid and hydrogen peroxide. In this way, high-purity silica particles were obtained.

The silica particles were baked in a 1,250°C dry nitrogen atmosphere to prepare high-purity synthetic quartz glass particles according to the present invention.

The total amount of metal impurity content of the high-purity synthetic quartz glass particles was 0.32 µg/g and the OH radical content was 95 ppm.

The high-purity synthetic quartz glass particles were fused with an oxyhydrogen flame in a furnace at 1,830°C to form a high-purity synthetic quartz glass piece with a thickness of 4 mm. This piece was mirror finished, and then its UV absorption spectrum was measured. As a result of the measurement, a characteristic peak of 85% transmittance at 245 nm was observed. Moreover, the percentage of the UV transmittance at 245 nm of the UV absorption spectrum was 94% of the UV transmittance at 300 nm.

The viscosity of the high-purity synthetic quartz glass particles at 1,300°C was as high as 3.75×10¹⁰ Pa^{·}s.

### EXAMPLE 3

A silica solution prepared by dealkalizing a sodium silicate aqueous solution was mixed with nitric acid and hydrogen peroxide. Then metal impurities were removed by cation exchange treatment. After the silica solution was gelated in an acidic environment, it was frozen, melted to separate the water, and then pulverized. In this way, a hydrated silica gel with a 0.3 mm average particle diameter including 25 percent by weight SiO₂ was obtained. After drying, the hydrated silica gel was rinsed with a cleaning fluid including hydrochloric acid and hydrogen peroxide. In this way, high-purity silica particles were obtained.

The silica particles were baked in a 1,250°C dry nitrogen atmosphere to prepare high-purity synthetic quartz glass particles according to the present invention.

The total amount of metal impurity content of the high-purity synthetic quartz glass particles was 0.10 µg/g and the OH radical content was 50 ppm.

The high-purity synthetic quartz glass particles were fused with an oxyhydrogen flame in a furnace at 1,830°C to form a high-purity synthetic quartz glass piece with a thickness of 4 mm. This piece was mirror finished, and then its UV absorption spectrum was measured. As a result of the measurement, a characteristic peak of 82% transmittance at 245 nm was observed. Moreover, the percentage of the UV transmittance at 245 nm of the UV absorption spectrum was 92% of the UV transmittance at 300 nm.

The viscosity of the high-purity synthetic quartz glass particles at 1,300°C was as high as 5.62×10¹⁰ Pa^{·}s. Industrial Applicability

According to the present invention, as described above, high-purity synthetic quartz glass particles having high viscosity similar to natural quartz and having high-purity similar to known synthetic quartz can be provided at low cost. The high-purity synthetic quartz glass particles are suitable for making products such as articles for heat-treating semiconductors, crucibles for pulling a silicon single crystal, and lamp materials.

## Claims

1. High purity synthetic quartz glass particles derived from alkali metal silicate and having a total amount of metal impurity content of 1 µg/g or less.

2. The high purity synthetic quartz glass particles according to claim 1, having oxygen-deficient defects.

3. The high purity synthetic quartz glass particles according to claim 1 or 2, having an OH radical content of 200 ppm or less.
